# EUROPÄISCHE PATENTSCHRIFT

(11) **EP 0 744 362 B1**
(45) Veröffentlichungstag und Bekanntmachung des Hinweises auf die Patenterteilung: **13.10.1999**
(21) Anmeldenummer: 96890049.8
(22) Anmeldetag: 18.03.1996
(51) Int. Cl.: B65G 47/54

(54) **Einrichtung an einer Rollenbahn**
Device for a roller-conveyor
Dispositif pour un transporteur à rouleaux

(30) Priorität: 21.05.1995 AT 49895
(43) Veröffentlichungstag der Anmeldung: 27.11.1996
(73) Patentinhaber: P.E.E.M. FÖRDERANLAGEN Ges.m.b.H., 8051 Graz (AT)
(72) Erfinder: Neukam, Helmut, 8071 Hausmannstätten (AT)
(74) Vertreter: Kliment, Peter, Dipl.-Ing.

(56) Entgegenhaltungen:
- EP-A- 0 477 104
- US-A- 4 962 841
- US-A- 5 117 961

## Beschreibung

Die Erfindung bezieht sich auf eine Einrichtung an einer Rollenbahn zum Abschieben von Transportgut quer zur Förderrichtung der Rollenbahn gemäß dem Oberbegriff des Anspruches 1.

Bei bekannten derartigen Rollenbahnen erfolgt das seitliche Abschieben der Transportgüter meist mit in den Förderweg der Rollenbahn einschwenkbaren senkrecht zur durch die Rollen bestimmten Ebene stehende Zungen, mit denen einzelne Stücke abgelenkt und seitlich aus der Rollenbahn abgeschoben werden können. Allerdings ist es dabei erforderlich, daß die einzelnen Stücke einen entsprechend großen Abstand voneinander aufweisen, damit die Zungen sicher in die Rollenbahn eingeschwenkt und aus dieser wieder ausgeschwenkt werden können, bevor das nächste Stück, das nicht ausgelenkt werden soll, in den Bereich der Zunge gelangt.

Dadurch ergibt sich aber eine entsprechende Verminderung der Transportkapazität der Rollenbahn

Durch die US 4 962 841 A wurde eine Einrichtung der eingangs erwähnten Art bekannt, bei der die Querrollen mit einer umlaufenden Rille versehen sind, die zur Aufnahme des Antriebsriemens dient, wobei dieser Antriebsriemen, der einen im wesentlichen kreisförmigen Querschnitt aufweist, gleichzeitig als Transportriemen für das auszuschiebende Gut dient und über die Mantelflächen der Querrollen vorragt. Dabei ergibt sich jedoch der Nachteil, daß es zu einer sehr hohen örtlichen Belastung der Antriebsriemen durch das auszuschiebende Gut und dadurch zu einem sehr hohen Verschleiß der Riemen.

Weiters wurde durch die DE 32 32 764 A eine Einrichtung zum Abschieben von Transportgut quer zur Förderrichtung einer Rollenbahn bekannt, bei der Querrollen mit einen kleineren Durchmesser aufweisenden Riemenscheiben verbunden sind, über die Antriebsriemen geführt sind. Dabei sind zwei Gruppen Querrollen vorgesehen, die jeweils mehr als zwei Querrollen umfassen und deren Riemenscheiben von einem gemeinsamen Antriebsriemen umschlungen sind. Die einander benachbarten Rollen der beiden Gruppen sind mit einer weiteren Riemenscheibe verbunden, die von einem weiteren, über eine angetriebene Riemenscheibe geführten Antriebsriemen umschlungen sind.

Bei dieser Lösung ergibt sich der Nachteil einer hohen Flächenpressung der Böden der abzuschiebenden Güter aufgrund des relativ kleinen Durchmessers und der geringen Breite der Querrollen, wodurch es, insbesondere bei schwereren Stückgütern zu Beschädigungen in deren Bodenbereich kommen kann.

Ziel der Erfindung ist es, diese Nachteile zu vermeiden und eine Einrichtung der eingangs erwähnten Art vorzuschlagen, die einen schonenden und verschleißarmen Betrieb ermöglicht.

Erfindungsgemäß wird dies bei einer Einrichtung der eingangs erwähnten Art dadurch erreicht, daß in dem Träger mehrere Paare von Querrollen drehbar gehalten sind und jedes Paar von nebeneinander angeordneten Querrollen von einem endlosen Schubriemen umschlungen ist und der Antriebsriemen über mindestens eine Querrolle eines jeden Paares von Querrollen geführt ist.

Durch die vorgeschlagenen Maßnahmen ergibt sich der Vorteil, daß relativ breite Flachriemen verwendet werden können, wodurch ein hohes Maß an Schonung der auszuschiebenden Güter erreicht werden kann. Dabei ergeben sich in der Regel nur relativ kurze Riemenlängen und eine Abstützung der auszuschiebenden Güter in relativ geringen Abständen. Außerdem wird auch erreicht, daß der Antriebsriemen nur dann die für eine ausreichende Kraftübertragung erforderliche Spannung aufweisen muß, wenn sich die Querrollen in deren Arbeitslage befinden, d.h. über die durch die Tragrollen bestimmte Ebene angehoben sind. Damit ist eine weitgehende Schonung des Antriebsriemens erreicht.

Die Erfindung wird nun anhand der Zeichnung näher erläutert. Dabei zeigen:
Fig. 1 einen Ausschnitt aus einer Rollenbahn mit einer erfindungsgemäßen Einrichtung in axonometrischer Darstellung und
Fig. 2 einen Schnitt durch eine Verteilanlage mit Rollenbahnen und einer Einrichtung nach der Fig. 1.

Eine Rollenbahn 20 weist üblicherweise zwei Längsholme 1 auf, in denen in geringen Abständen Rollen 2 drehbar gelagert sind, wobei die obersten Mantellinien der Rollen 2 über die Oberseiten 3 der Längsholme 1 nach oben vorragen.

An der Unterseite der Längsholme 1 ist ein Gehäuse 4 befestigt, das an seinen in Richtung der Längsholme verlaufenden Rändern mit nach außen gerichteten Abwinkelungen 5 versehen ist. Diese sind von aus Gründen einer besseren Übersichtlichkeit nicht dargestellten Schrauben durchsetzt, die in die Längsholme 1 eingreifen.

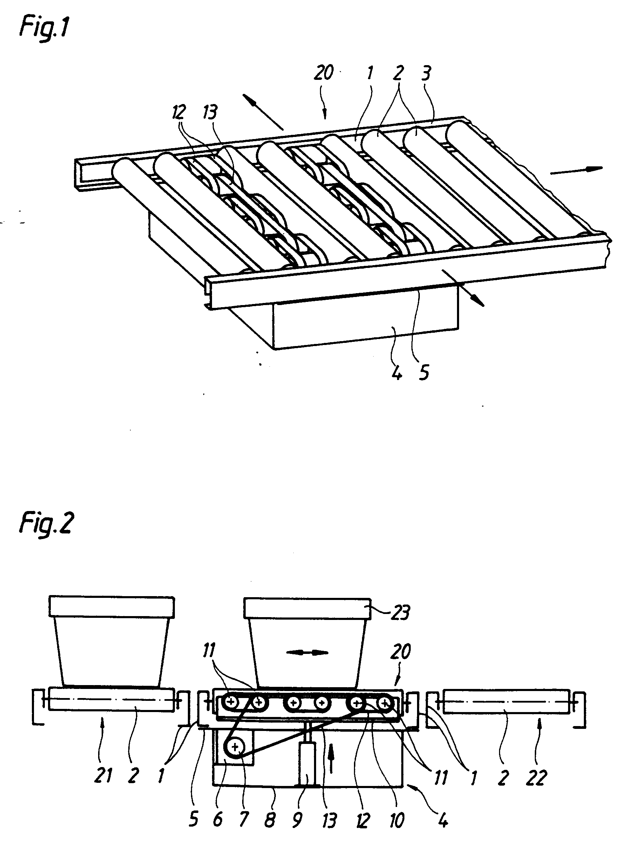

Wie insbesondere aus der Fig. 2 zu ersehen ist, ist im Gehäuse 4 ein Antriebsmotor 6 ortsfest gehalten, der mit einer Treibscheibe 7 versehen ist.

Weiters ist am Boden 8 des Gehäuses 4 ein durch eine Zylinder-Kolben-Einheit gebildete Hubeinrichtung 9 abgestützt, die einen Träger 10 vertikal verstellbar hält.

In diesem Träger 10, der parallel zu den Rollen 2 der Rollenbahn 20 verläuft, sind beim dargestellten Ausführungsbeispiel drei Paare von Querrollen 11 drehbar gehalten. Jedes Paar von Querrollen 11 ist von einem Paar von Schubriemen 12 umschlungen, die nahe den Stirnseiten, bzw. Enden der Querrollen 11 angeordnet sind.

Der Antrieb der Querrollen 11 erfolgt über einen dehnbaren Riemen 13 der über die Treibscheibe 7 des Motors 6, die näher der in Längsrichtung verlaufenden Mitte der Rollenbahn 20 liegenden Querrollen 11 der beiden äußeren Paare von Querrollen 11 und die beiden mittleren Querrollen 11 geführt ist. Dabei verläuft der dehnbare Riemen 13 zwischen den paarweise angeordneten Schubriemen 12.

Zum Ausschieben eines in einem Strom von mit geringem gegenseitigen Abstand auf der Rollenbahn 20 ankommenden Stückgutes 23 wird, sobald das Stückgut 23 in den Bereich der erfindungsgemäßen Einrichtung gelangt ist, der Hubantrieb 9 aktiviert und der Träger 10 angehoben, sodaß die obersten Mantellinien der Schubriemen 12 oberhalb der obersten Mantellinien der Rollen 2 verlaufen. Gleichzeitig wird der in seiner Drehrichtung umkehrbare Antriebsmotor 6 aktiviert und treibt über den dehnbaren Riemen 13 die Schubriemen 12 in der gewünschten Richtung an. Dadurch wird das nun auf den Schubriemen 12 liegende Stückgut 23 quer zur Förderrichtung der Rollenbahn 20 aus dieser ausgeschoben und z.B. auf eine neben der Rollenbahn 20 verlaufenden Rollenbahn 21 oder 22 übergeben und von dieser weitertransportiert, oder z.B. auf ein Rutsche übergeben, die zu einer entsprechenden Sammelstelle führt.

## Patentansprüche

1. Einrichtung an einer Rollenbahn zum Abschieben von Transportgut quer zur Förderrichtung der Rollenbahn, bei der zwischen zwei parallel verlaufenden Längsholmen eine Vielzahl von drehbar gehaltene Rollen gelagert sind, deren Mantelflächen als Auflager für die zu transportierenden Waren dienen und von denen zumindest eine mit einem Antrieb verbunden ist, und zumindest zwischen zwei einander benachbarten Rollen (2) der Rollenbahn (20) über einen um einen ortsfesten Antrieb (6, 7) geschlungenen dehnbaren Antriebsriemen (13) antreibbare Querrollen (11) vorgesehen sind, deren Achsen senkrecht zu den Achsen der Rollen (2) der Rollenbahn (20) stehen und in einem heb- und senkbar gehaltenen Träger (10) gelagert sind, wobei die durch die Querrollen (11) bestimmte Auflagerebene über die durch die Rollen (2) der Rollenbahn (20) bestimmte Auflagerebene für die Waren mittels eines an dem Träger (10) angreifender Hubantriebes (9) anhebbar ist, **dadurch gekennzeichnet,** daß in den Träger (10) mehrere Paare von Querrollen (11) drehbar gehalten sind und jedes Paar von nebeneinander angeordneten Querrollen (11) vor einem endlosen Schubriemen (12) umschlungen ist und der Antriebsriemen (13) über mindestens eine Querrolle eines jeden Paares vor Querrollen (11) geführt ist.

## Claims

1. A device in a roller conveyor for pushing off transported goods transversally to the direction of conveyance of the roller conveyor, in which a plurality of rotatably held rollers are held between two parallel extending longitudinal cross-ties, with the jacket surfaces of said rollers acting as bearings for the goods to be transported and of which at least one is provided with a drive, and transversal rollers (11) are provided at least between two mutually adjacent rollers (2) of the roller conveyor (20), which transversal rollers are drivable through an extensible drive belt (13) which is wrapped around a stationary drive (6, 7), with the axes of the transversal rollers being perpendicular to the axes of the rollers (2) of the roller conveyor (20) and being held in a liftable and lowerable carrier (10), with the bearing plane as defined by the transversal rollers (11) able to be lifted over the bearing plane for the goods as defined by the rollers (2) of the roller conveyor (20) by means of a lifting drive (9) acting upon the carrier (10), characterized in that several pairs of transversal rollers (11) are rotatably held in the carrier (10) and each of the mutually adjacent transversal rollers (11) is enveloped by an endless pushing belt (12) and the drive belt (13) is guided over at least one transversal roller of each pair of transversal rollers (11).

## Revendications

1. Dispositif prévu dans un transporteur à rouleaux pour déplacer des objets transportés perpendiculairement au sens de transport du transporteur à rouleaux, dans lequel il est prévu entre deux longerons parallèles une pluralité de rouleaux supportés avec possibilité de rotation, dont les surfaces d'enveloppe servent d'appui aux objets à transporter et dont l'un au moins est relié à un entraînement, et il est prévu entre au moins deux rouleaux (2) voisins l'un de l'autre dans le transporteur à rouleaux (20) des rouleaux perpendiculaires (11) pouvant être entraînés par une courroie d'entraînement (13) extensible passée autour d'un entraînement (6, 7) stationnaire, dont les axes sont perpendiculaires aux axes des rouleaux (2) du transporteur à rouleaux (20) et qui sont portés dans un support (10) pouvant être relevé et abaissé, le plan d'appui défini par les rouleaux perpendiculaires (11) pouvant être soulevé au-dessus du plan d'appui défini par les rouleaux (2) du transporteur à rouleaux (20) au moyen d'un entraînement de levage (9) qui se met en prise sur le support (10), caractérisé en ce que le support (10) contient plusieurs paires de rouleaux perpendiculaires (11) maintenus avec possibilité de rotation et chaque paire de rouleaux perpendiculaires (11) contigus est entourée d'une courroie de poussée (12) sans fin et la courroie d'entraînement (13) est passée par-dessus au moins un des rouleaux de chaque paire de rouleaux transversaux (11).
